# EUROPEAN PATENT APPLICATION

(11) **EP 3 567 858 A1**
(43) Date of publication of application: **13.11.2019**
(21) Application number: 17889745.0
(22) Date of filing: 27.12.2017
(51) Int. Cl.: H04N 19/40, H04N 19/13, H04N 19/176

(54) **METHOD AND DEVICE FOR ENCODING/DECODING VIDEO SIGNAL USING SECONDARY TRANSFORM**

(30) Priority: 03.01.2017 US 201762441587 P
(71) Applicant: LG Electronics Inc., Seoul 07336 (KR)
(72) Inventor: JANG, Hyeongmoon, Seoul 06772 (KR); KIM, Seunghwan, Seoul 06772 (KR); NAM, Junghak, Seoul 06772 (KR); LIM, Jaehyun, Seoul 06772 (KR)
(74) Representative: Diehl & Partner GbR
(86) International application number: PCT/KR2017/015591
(87) International publication number: WO 2018/128323

(57) **Abstract**

Disclosed are a method and an apparatus for encoding/decoding a video signal. Specifically, a method for decoding a video signal may include: generating a quantized transform block by performing entropy decoding for the video signal; generating a dequantized transform block by performing dequantization for the quantized transform block; determining whether to apply secondary inverse transform based on information related to a non-zero coefficient in the dequantized transform block; and performing the secondary inverse transform for the dequantized transform block by using a secondary inverse transform kernel applied to the dequantized transform block.

## Description

### [Technical Field]

The present invention relates to an apparatus and an apparatus for encoding/decoding a video signal, and more particularly, to a method for encoding/decoding a video signal using secondary transform and an apparatus for supporting the same.

### [Background Art]

Compression encoding means a series of signal processing techniques for transmitting digitized information through a communication line or techniques for storing information in a form suitable for a storage medium. The medium including a picture, an image, audio, etc. may be a target for compression encoding, and particularly, a technique for performing compression encoding on a picture is referred to as video image compression.

Next-generation video contents are supposed to have the characteristics of high spatial resolution, a high frame rate and high dimensionality of scene representation. In order to process such contents, a drastic increase in the memory storage, memory access rate and processing power will result.

Accordingly, it is required to design a coding tool for processing next-generation video contents efficiently.

### [Disclosure]

### [Technical Problem]

An embodiment of the present invention provides a method for applying secondary transform to a signal of a transform region which is primarily transformed.

Furthermore, an embodiment of the present invention provides a method for efficiently a size of a transform kernel used for secondary transform.

Furthermore, an embodiment of the present invention proposes a method for adaptively selecting a transform kernel according to a size of a block and performs secondary transform by using the selected transform kernel.

Furthermore, an embodiment of the present invention provides a method for adaptively selecting a kernel adapted to secondary transform by transmitting a size of a transform kernel.

Furthermore, an embodiment of the present invention provides a method for determining whether to apply secondary transform or an application range using a residual signal.

Furthermore, an embodiment of the present invention provides a method for deriving a size of a transform kernel applied to secondary transform using a residual signal.

The objects of the present invention are not limited to the technical objects described above, and other technical that are objects not mentioned herein may be understood to those skilled in the art from the description below.

### [Technical Solution]

In an aspect of the present invention, a method for decoding a video signal may include: generating a quantized transform block by performing entropy decoding for the video signal; generating a dequantized transform block by performing dequantization for the quantized transform block; determining whether to apply secondary inverse transform based on information related to a non-zero coefficient in the dequantized transform block; and performing the secondary inverse transform for the dequantized transform block by using a secondary inverse transform kernel applied to the dequantized transform block.

Preferably, the determining of whether to apply the second inverse transform may include checking whether one or more non-zero coefficients exist in a top-left specific region of the dequantized transform block, and if one or more non-zero coefficients exist in the specific region, the secondary inverse transform may be applied to the dequantized transform block.

Preferably, the determining of whether to apply the second inverse transform may include checking the number of non-zero coefficients in the top-left specific region of the dequantized transform block, and if the number of non-zero coefficients in the specific region exceeds a specific threshold, the secondary inverse transform may be applied to the dequantized transform block.

Preferably, the determining of whether to apply the second inverse transform may include partitioning the dequantized transform block into subblocks having a specific size, and determining whether to apply the second inverse transform in units of the subblock.

Preferably, the determining of whether to apply the second inverse transform in units of the subblock may include checking whether there are one or more non-zero coefficients in a current subblock, and if one or more non-zero coefficients exist in the current subblock, the secondary inverse transform may be applied to the current subblock.

Preferably, the determining of whether to apply the second inverse transform in units of the subblock may include checking the number of non-zero coefficients in the current subblock, and if the number of non-zero coefficients in the current subblock exceeds a specific threshold, the secondary inverse transform may be applied to the current subblock.

Preferably, the method may further include determining a size of the secondary inverse transform kernel applied to the dequantized transform block based on information related to the non-zero coefficient in the dequantized transform block.

Preferably, the size of the secondary inverse transform kernel may be determined as the size of a smallest secondary inverse transform kernel among secondary inverse transform kernels including the non-zero coefficients which exist in a region having a specific size at a top-left specific size of the dequantized transform block.

Preferably, the method may further include: if the size of the dequantized transform block is larger than a block having a predetermined minimum size, extracting a syntax indicating the size of the secondary inverse transform kernel from the video signal; and determining the size of the secondary inverse transform kernel applied to the dequantized transform block based on the syntax.

Preferably, the syntax indicating the size of the secondary inverse transform kernel may be transmitted in units of a sequence, a picture, a slice, a coding block, or a transform block.

In another aspect of the present invention, an apparatus for decoding a video signal may include: an entropy decoding unit generating a quantized transform block by performing entropy decoding for the video signal; a dequantization unit generating a dequantized transform block by performing dequantization for the quantized transform block; a secondary inverse transform determination unit determining whether to apply secondary inverse transform based on information related to a non-zero coefficient in the dequantized transform block; and a secondary inverse transform unit performing the secondary inverse transform for the dequantized transform block by using a secondary inverse transform kernel applied to the dequantized transform block.

### [Advantageous Effects]

According to an embodiment of the present invention, compression performance can be further enhanced by performing secondary transform for a signal of a transform domain which is primarily transformed and the amount of residual signal data signaled to a decoder can be effectively reduced.

Further, according to an embodiment of the present invention, in applying secondary transform, it is possible to increase compression efficiency by determining kernels of sizes suitable for blocks of various sizes.

Further, according to an embodiment of the present invention, transform kernels of various sizes can be applied by signaling an optimized size of kernel information to a decoder regardless of the size of a block, thereby improving the compression performance.

The technical effects of the present invention are not limited to the technical effects described above, and other technical effects not mentioned herein may be understood to those skilled in the art from the description below.

### [Description of Drawings]

The accompanying drawings, which are included herein as a part of the description for help understanding the present invention, provide embodiments of the present invention, and describe the technical features of the present invention with the description below.
FIG. 1 is illustrates a schematic block diagram of an encoder in which the encoding of a still image or video signal is performed, as an embodiment to which the present invention is applied.
FIG. 2 illustrates a schematic block diagram of a decoder in which decoding of a still image or video signal is performed, as an embodiment to which the present invention is applied.
FIG. 3 is a diagram for describing a split structure of a coding unit that may be applied to the present invention.
FIG. 4 is a diagram for describing a prediction unit that may be applied to the present invention.
FIG. 5 is a diagram for describing a method for determining a size of a transform kernel used for secondary transform based on the size of a block as an embodiment to which the present invention is applied.
FIGS. 6 and 7 are diagrams for describing a method for determining a size of a transform kernel used for secondary transform based on a width and a height of a block as an embodiment to which the present invention is applied.
Referring to FIG. 8, a case where non-separable transform is applied for secondary transform is assumed.
FIG. 9 is a flowchart showing a method for determining a size of a transform kernel used for secondary transform as an embodiment to which the present invention is applied.
FIG. 10 is a flowchart illustrating a method for determining a size of a transform kernel used for secondary transform as an embodiment to which the present invention is applied.
FIG. 11 is a diagram illustrating a method for determining whether to apply secondary transform by using a residual signal according to an embodiment of the present invention.
FIGS. 12 and 13 are diagrams illustrating a method for determining whether to apply secondary transform by using a residual signal according to an embodiment of the present invention.
FIG. 14 is a diagram illustrating a method for determining a size of a secondary transform kernel by using a residual signal according to an embodiment of the present invention.
FIG. 15 is a diagram illustrating a decoding method of a video signal according to an embodiment of the present invention.
FIG. 16 is a diagram illustrating a decoding apparatus of a video signal according to an embodiment of the present invention.

### [Mode for Invention]

Hereinafter, a preferred embodiment of the present invention will be described by reference to the accompanying drawings. The description that will be described below with the accompanying drawings is to describe exemplary embodiments of the present invention, and is not intended to describe the only embodiment in which the present invention may be implemented. The description below includes particular details in order to provide perfect understanding of the present invention. However, it is understood that the present invention may be embodied without the particular details to those skilled in the art.

In some cases, in order to prevent the technical concept of the present invention from being unclear, structures or devices which are publicly known may be omitted, or may be depicted as a block diagram centering on the core functions of the structures or the devices.

Further, although general terms widely used currently are selected as the terms in the present invention as much as possible, a term that is arbitrarily selected by the applicant is used in a specific case. Since the meaning of the term will be clearly described in the corresponding part of the description in such a case, it is understood that the present invention will not be simply interpreted by the terms only used in the description of the present invention, but the meaning of the terms should be figured out.

Specific terminologies used in the description below may be provided to help the understanding of the present invention. Furthermore, the specific terminology may be modified into other forms within the scope of the technical concept of the present invention. For example, a signal, data, a sample, a picture, a frame, a block, etc may be properly replaced and interpreted in each coding process.

Hereinafter, in this specification, a 'processing unit' means a unit in which a processing process of encoding/decoding such as prediction, transform, and/or quantization is performed. Hereinafter, for convenience of description, the processing unit may be referred to as a 'processing block' or a 'block'.

The processing unit may be interpreted to include a unit for a luma component and a unit for a chroma component. For example, the processing unit may correspond to a Coding Tree Unit (CTU), a Coding Unit (CU), a Prediction Unit (PU), or a Transform Unit (TU).

Further, the processing unit may be interpreted as the unit for the luma component and the unit for the chroma component. For example, the processing unit may correspond to a Coding Tree Block (CTB), a Coding Block (CB), a Prediction Block (PB), or a Transform Block (TB) for the luma component. Alternatively, the processing unit may correspond to the Coding Tree Block (CTB), the Coding Block (CB), the Prediction Block (PB), or the Transform Block (TB) for the chroma component. Further, the present invention is not limited thereto and the processing unit may be interpreted to include the unit for the luma component and the unit for the chroma component.

Further, the processing unit is not particularly limited to a square block, but may be configured as a polygonal shape having three or more vertexes.

In addition, hereinafter, in this specification, a pixel and the like will be collectively referred to as a sample. In addition, using the sample may mean using a pixel value and the like.

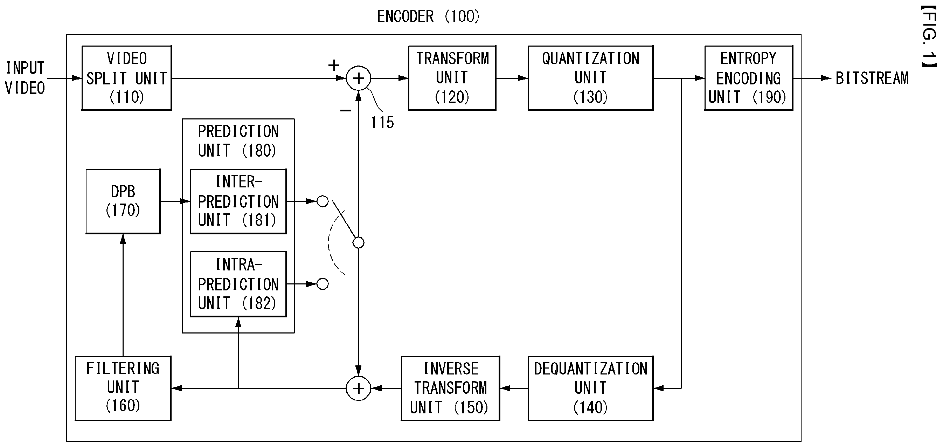

FIG. 1 is illustrates a schematic block diagram of an encoder in which the encoding of a still image or video signal is performed, as an embodiment to which the present invention is applied.

Referring to FIG. 1, the encoder 100 may include a video split unit 110, a subtractor 115, a transform unit 120, a quantization unit 130, a dequantization unit 140, an inverse transform unit 150, a filtering unit 160, a decoded picture buffer (DPB) 170, a prediction unit 180 and an entropy encoding unit 190. Furthermore, the prediction unit 180 may include an inter-prediction unit 181 and an intra-prediction unit 182.

The video split unit 110 splits an input video signal (or picture or frame), input to the encoder 100, into one or more processing units.

The subtractor 115 generates a residual signal (or residual block) by subtracting a prediction signal (or prediction block), output by the prediction unit 180 (i.e., by the inter-prediction unit 181 or the intra-prediction unit 182), from the input video signal. The generated residual signal (or residual block) is transmitted to the transform unit 120.

The transform unit 120 generates transform coefficients by applying a transform scheme (e.g., discrete cosine transform (DCT), discrete sine transform (DST), graph-based transform (GBT) or Karhunen-Loeve transform (KLT)) to the residual signal (or residual block). In this case, the transform unit 120 may generate transform coefficients by performing transform using a prediction mode applied to the residual block and a transform scheme determined based on the size of the residual block.

The quantization unit 130 quantizes the transform coefficient and transmits it to the entropy encoding unit 190, and the entropy encoding unit 190 performs an entropy coding operation of the quantized signal and outputs it as a bit stream.

Meanwhile, the quantized signal outputted by the quantization unit 130 may be used to generate a prediction signal. For example, a residual signal may be reconstructed by applying dequatization and inverse transformation to the quantized signal through the dequantization unit 140 and the inverse transform unit 150. A reconstructed signal may be generated by adding the reconstructed residual signal to the prediction signal output by the inter-prediction unit 181 or the intra-prediction unit 182.

Meanwhile, during such a compression process, neighbor blocks are quantized by different quantization parameters. Accordingly, an artifact in which a block boundary is shown may occur. Such a phenomenon is referred to a blocking artifact, which is one of important factors for evaluating image quality. In order to decrease such an artifact, a filtering process may be performed. Through such a filtering process, the blocking artifact is removed and the error of a current picture is decreased at the same time, thereby improving image quality.

The filtering unit 160 applies filtering to the reconstructed signal, and outputs it through a playback device or transmits it to the decoded picture buffer 170. The filtered signal transmitted to the decoded picture buffer 170 may be used as a reference picture in the inter-prediction unit 181. As described above, an encoding rate as well as image quality can be improved using the filtered picture as a reference picture in an inter-picture prediction mode.

The decoded picture buffer 170 may store the filtered picture in order to use it as a reference picture in the inter-prediction unit 181.

The inter-prediction unit 181 performs temporal prediction and/or spatial prediction with reference to the reconstructed picture in order to remove temporal redundancy and/or spatial redundancy. In this case, a blocking artifact or ringing artifact may occur because a reference picture used to perform prediction is a transformed signal that experiences quantization or dequantization in a block unit when it is encoded/decoded previously.

Accordingly, in order to solve performance degradation attributable to the discontinuity of such a signal or quantization, signals between pixels may be interpolated in a sub-pixel unit by applying a low pass filter to the inter-prediction unit 181. In this case, the sub-pixel means a virtual pixel generated by applying an interpolation filter, and an integer pixel means an actual pixel that is present in a reconstructed picture. A linear interpolation, a bi-linear interpolation, a wiener filter, and the like may be applied as an interpolation method.

The interpolation filter may be applied to the reconstructed picture, and may improve the accuracy of prediction. For example, the inter-prediction unit 181 may perform prediction by generating an interpolation pixel by applying the interpolation filter to the integer pixel and by using the interpolated block including interpolated pixels as a prediction block.

The intra-prediction unit 182 predicts a current block with reference to samples neighboring the block that is now to be encoded. The intra-prediction unit 182 may perform the following procedure in order to perform intra-prediction. First, the intra-prediction unit 182 may prepare a reference sample necessary to generate a prediction signal. Furthermore, the intra-prediction unit 182 may generate a prediction signal using the prepared reference sample. Next, the intra-prediction unit 182 may encode a prediction mode. In this case, the reference sample may be prepared through reference sample padding and/or reference sample filtering. A quantization error may be present because the reference sample experiences the prediction and the reconstruction process. Accordingly, in order to reduce such an error, a reference sample filtering process may be performed on each prediction mode used for the intra-prediction.

The prediction signal (or prediction block) generated through the inter-prediction unit 181 or the intra-prediction unit 182 may be used to generate a reconstructed signal (or reconstructed block) or may be used to generate a residual signal (or residual block).

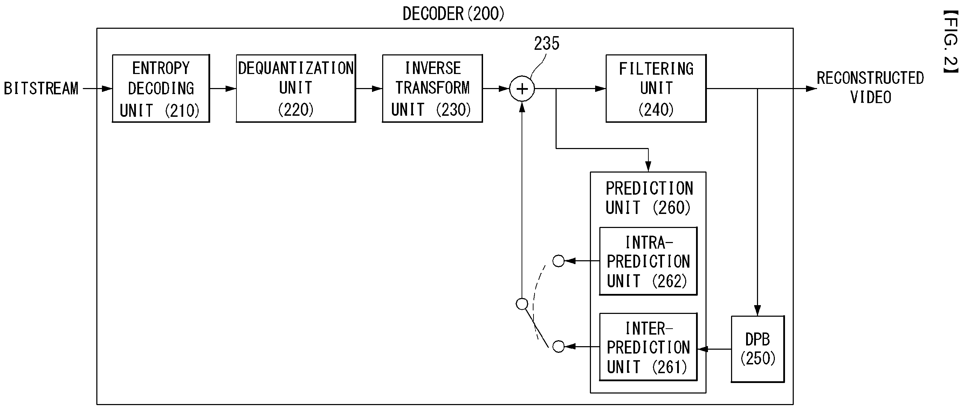

FIG. 2 illustrates a schematic block diagram of a decoder in which decoding of a still image or video signal is performed, as an embodiment to which the present invention is applied.

Referring to FIG. 2, the decoder 200 may include an entropy decoding unit 210, a dequantization unit 220, an inverse transform unit 230, an adder 235, a filtering unit 240, a decoded picture buffer (DPB) 250 and a prediction unit 260. Furthermore, the prediction unit 260 may include an inter-prediction unit 261 and an intra-prediction unit 262.

Furthermore, a reconstructed video signal output through the decoder 200 may be played back through a playback device.

The decoder 200 receives a signal (i.e., bit stream) output by the encoder 100 shown in FIG. 1. The entropy decoding unit 210 performs an entropy decoding operation on the received signal.

The dequantization unit 220 obtains transform coefficients from the entropy-decoded signal using quantization step size information.

The inverse transform unit 230 obtains a residual signal (or residual block) by inverse transforming the transform coefficients by applying an inverse transform scheme.

The adder 235 adds the obtained residual signal (or residual block) to the prediction signal (or prediction block) output by the prediction unit 260 (i.e., the inter-prediction unit 261 or the intra-prediction unit 262), thereby generating a reconstructed signal (or reconstructed block).

The filtering unit 240 applies filtering to the reconstructed signal (or reconstructed block) and outputs the filtered signal to a playback device or transmits the filtered signal to the decoded picture buffer 250. The filtered signal transmitted to the decoded picture buffer 250 may be used as a reference picture in the inter-prediction unit 261.

In this specification, the embodiments described in the filtering unit 160, inter-prediction unit 181 and intra-prediction unit 182 of the encoder 100 may be identically applied to the filtering unit 240, inter-prediction unit 261 and intra-prediction unit 262 of the decoder, respectively.

### Processing unit split structure

In general, a block-based image compression method is used in the compression technique (e.g., HEVC) of a still image or a video. The block-based image compression method is a method of processing an image by splitting it into specific block units, and may decrease memory use and a computational load.

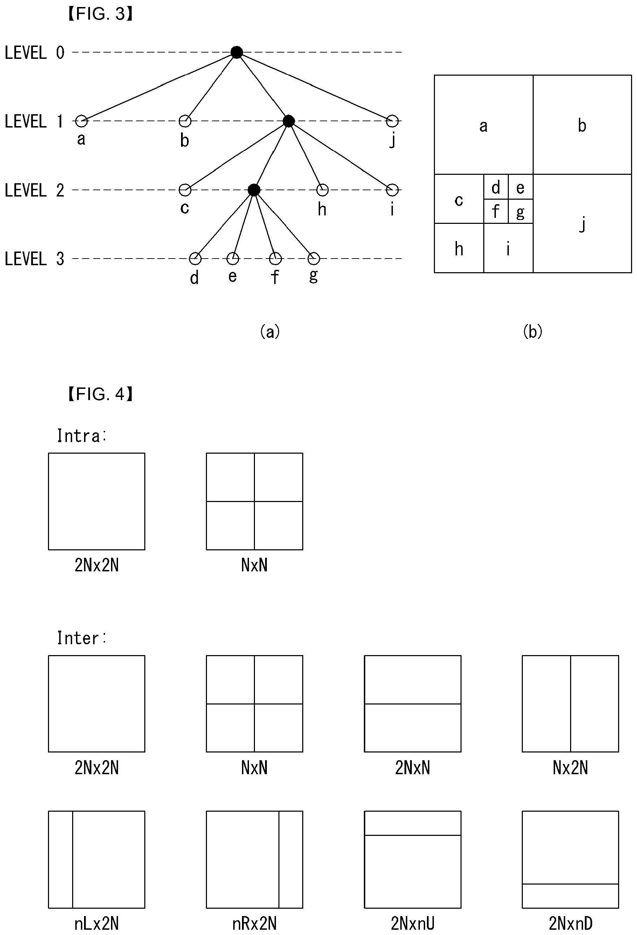

FIG. 3 is a diagram for describing a split structure of a coding unit which may be applied to the present invention.

An encoder splits a single image (or picture) into coding tree units (CTUs) of a quadrangle form, and sequentially encodes the CTUs one by one according to raster scan order.

In HEVC, a size of CTU may be determined as one of 64×64, 32×32, and 16×16. The encoder may select and use the size of a CTU based on resolution of an input video signal or the characteristics of input video signal. The CTU includes a coding tree block (CTB) for a luma component and the CTB for two chroma components that correspond to it.

One CTU may be split in a quad-tree structure. That is, one CTU may be split into four units each having a square form and having a half horizontal size and a half vertical size, thereby being capable of generating coding units (CUs). Such splitting of the quad-tree structure may be recursively performed. That is, the CUs are hierarchically split from one CTU in the quad-tree structure.

A CU means a basic unit for the processing process of an input video signal, for example, coding in which intra/inter prediction is performed. A CU includes a coding block (CB) for a luma component and a CB for two chroma components corresponding to the luma component. In HEVC, a CU size may be determined as one of 64x64, 32×32, 16×16, and 8×8.

Referring to FIG. 3, the root node of a quad-tree is related to a CTU. The quad-tree is split until a leaf node is reached. The leaf node corresponds to a CU.

This is described in more detail. The CTU corresponds to the root node and has the smallest depth (i.e., depth=0) value. A CTU may not be split depending on the characteristics of an input video signal. In this case, the CTU corresponds to a CU.

A CTU may be split in a quad-tree form. As a result, lower nodes, that is, a depth 1 (depth=1), are generated. Furthermore, a node (i.e., leaf node) that belongs to the lower nodes having the depth of 1 and that is no longer split corresponds to a CU. For example, in FIG. 3(b), a CU(a), a CU(b) and a CU(j) corresponding to nodes a, b and j have been once split from the CTU, and have a depth of 1.

At least one of the nodes having the depth of 1 may be split in a quad-tree form. As a result, lower nodes having a depth 1 (i.e., depth=2) are generated. Furthermore, a node (i.e., leaf node) that belongs to the lower nodes having the depth of 2 and that is no longer split corresponds to a CU. For example, in FIG. 3(b), a CU(c), a CU(h) and a CU(i) corresponding to nodes c, h and i have been twice split from the CTU, and have a depth of 2.

Furthermore, at least one of the nodes having the depth of 2 may be split in a quad-tree form again. As a result, lower nodes having a depth 3 (i.e., depth=3) are generated. Furthermore, a node (i.e., leaf node) that belongs to the lower nodes having the depth of 3 and that is no longer split corresponds to a CU. For example, in FIG. 3(b), a CU(d), a CU(e), a CU(f) and a CU(g) corresponding to nodes d, e, f and g have been three times split from the CTU, and have a depth of 3.

In the encoder, a maximum size or minimum size of a CU may be determined based on the characteristics of a video image (e.g., resolution) or by considering the encoding rate. Furthermore, information about the maximum or minimum size or information capable of deriving the information may be included in a bit stream. A CU having a maximum size is referred to as the largest coding unit (LCU), and a CU having a minimum size is referred to as the smallest coding unit (SCU).

In addition, a CU having a tree structure may be hierarchically split with predetermined maximum depth information (or maximum level information). Furthermore, each split CU may have depth information. Since the depth information represents a split count and/or degree of a CU, it may include information about the size of a CU.

Since the LCU is split in a Quad-tree shape, the size of SCU may be obtained by using a size of LCU and the maximum depth information. Or, inversely, the size of LCU may be obtained by using a size of SCU and the maximum depth information of the tree.

For a single CU, the information (e.g., a split CU flag (split_cu_flag)) that represents whether the corresponding CU is split may be forwarded to the decoder. This split information is included in all CUs except the SCU. For example, when the value of the flag that represents whether to split is '1', the corresponding CU is further split into four CUs, and when the value of the flag that represents whether to split is '0', the corresponding CU is not split any more, and the processing process for the corresponding CU may be performed.

As described above, a CU is a basic unit of the coding in which the intra-prediction or the inter-prediction is performed. The HEVC splits the CU in a prediction unit (PU) for coding an input video signal more effectively.

A PU is a basic unit for generating a prediction block, and even in a single CU, the prediction block may be generated in different way by a unit of PU. However, the intra-prediction and the inter-prediction are not used together for the PUs that belong to a single CU, and the PUs that belong to a single CU are coded by the same prediction method (i.e., the intra-prediction or the inter-prediction).

A PU is not split in the Quad-tree structure, but is split once in a single CU in a predetermined shape. This will be described by reference to the drawing below.

FIG. 4 is a diagram for describing a prediction unit that may be applied to the present invention.

A PU is differently split depending on whether the intra-prediction mode is used or the inter-prediction mode is used as the coding mode of the CU to which the PU belongs.

FIG. 4(a) illustrates a PU if the intra-prediction mode is used, and FIG. 4(b) illustrates a PU if the inter-prediction mode is used.

Referring to FIG. 4(a), assuming that the size of a single CU is 2N×2N (N = 4, 8, 16 and 32), the single CU may be split into two types (i.e., 2N×2N or N×N).

In this case, if a single CU is split into the PU of 2N×2N shape, it means that only one PU is present in a single CU.

Meanwhile, if a single CU is split into the PU of N×N shape, a single CU is split into four PUs, and different prediction blocks are generated for each PU unit. However, such PU splitting may be performed only if the size of CB for the luma component of CU is the minimum size (i.e., the case that a CU is an SCU).

Referring to FIG. 4(b), assuming that the size of a single CU is 2N×2N (N = 4, 8, 16 and 32), a single CU may be split into eight PU types (i.e., 2N×2N, NxN, 2NxN, Nx2N, nLx2N, nRx2N, 2NxnU and 2NxnD)

As in the intra-prediction, the PU split of N×N shape may be performed only if the size of CB for the luma component of CU is the minimum size (i.e., the case that a CU is an SCU).

The inter-prediction supports the PU split in the shape of 2NxN that is split in a horizontal direction and in the shape of Nx2N that is split in a vertical direction.

In addition, the inter-prediction supports the PU split in the shape of nL×2N, nRx2N, 2N×nU and 2NxnD, which is an asymmetric motion split (AMP). In this case, 'n' means 1/4 value of 2N. However, the AMP may not be used if the CU to which the PU is belonged is the CU of minimum size.

In order to encode the input video signal in a single CTU efficiently, the optimal split structure of the coding unit (CU), the prediction unit (PU) and the transform unit (TU) may be determined based on a minimum rate-distortion value through the processing process as follows. For example, as for the optimal CU split process in a 64x64 CTU, the rate-distortion cost may be calculated through the split process from a CU of 64×64 size to a CU of 8×8 size. The detailed process is as follows.
1) The optimal split structure of a PU and TU that generates the minimum rate distortion value is determined by performing inter/intra-prediction, transformation/quantization, dequantization/inverse transformation and entropy encoding on the CU of 64×64 size.
2) The optimal split structure of a PU and TU is determined to split the 64×64 CU into four CUs of 32×32 size and to generate the minimum rate distortion value for each 32×32 CU.
3) The optimal split structure of a PU and TU is determined to further split the 32×32 CU into four CUs of 16×16 size and to generate the minimum rate distortion value for each 16×16 CU.
4) The optimal split structure of a PU and TU is determined to further split the 16x16 CU into four CUs of 8x8 size and to generate the minimum rate distortion value for each 8×8 CU.
5) The optimal split structure of a CU in the 16×16 block is determined by comparing the rate-distortion value of the 16×16 CU obtained in the process 3) with the addition of the rate-distortion value of the four 8×8 CUs obtained in the process 4). This process is also performed for remaining three 16×16 CUs in the same manner.
6) The optimal split structure of CU in the 32×32 block is determined by comparing the rate-distortion value of the 32×32 CU obtained in the process 2) with the addition of the rate-distortion value of the four 16x16 CUs that is obtained in the process 5). This process is also performed for remaining three 32×32 CUs in the same manner.
7) Finally, the optimal split structure of CU in the 64×64 block is determined by comparing the rate-distortion value of the 64×64 CU obtained in the process 1) with the addition of the rate-distortion value of the four 32×32 CUs obtained in the process 6).

In the intra-prediction mode, a prediction mode is selected as a PU unit, and prediction and reconstruction are performed on the selected prediction mode in an actual TU unit.

A TU means a basic unit in which actual prediction and reconstruction are performed. A TU includes a transform block (TB) for a luma component and a TB for two chroma components corresponding to the luma component.

In the example of FIG. 3, as in an example in which one CTU is split in the quad-tree structure to generate a CU, a TU is hierarchically split from one CU to be coded in the quad-tree structure.

TUs split from a CU may be split into smaller and lower TUs because a TU is split in the quad-tree structure. In HEVC, the size of a TU may be determined to be as one of 32×32, 16×16, 8×8 and 4×4.

Referring back to FIG. 3, the root node of a quad-tree is assumed to be related to a CU. The quad-tree is split until a leaf node is reached, and the leaf node corresponds to a TU.

This is described in more detail. A CU corresponds to a root node and has the smallest depth (i.e., depth=0) value. A CU may not be split depending on the characteristics of an input image. In this case, the CU corresponds to a TU.

A CU may be split in a quad-tree form. As a result, lower nodes having a depth 1 (depth=1) are generated. Furthermore, a node (i.e., leaf node) that belongs to the lower nodes having the depth of 1 and that is no longer split corresponds to a TU. For example, in FIG. 3(b), a TU(a), a TU(b) and a TU(j) corresponding to the nodes a, b and j are once split from a CU and have a depth of 1.

At least one of the nodes having the depth of 1 may be split in a quad-tree form again. As a result, lower nodes having a depth 2 (i.e., depth=2) are generated. Furthermore, a node (i.e., leaf node) that belongs to the lower nodes having the depth of 2 and that is no longer split corresponds to a TU. For example, in FIG. 3(b), a TU(c), a TU(h) and a TU(i) corresponding to the node c, h and I have been split twice from the CU and have the depth of 2.

Furthermore, at least one of the nodes having the depth of 2 may be split in a quad-tree form again. As a result, lower nodes having a depth 3 (i.e., depth=3) are generated. Furthermore, a node (i.e., leaf node) that belongs to the lower nodes having the depth of 3 and that is no longer split corresponds to a TU. For example, in FIG. 3(b), a TU(d), a TU(e), a TU(f) and a TU(g) corresponding to the nodes d, e, f and g have been three times split from the CU and have the depth of 3.

A TU having a tree structure may be hierarchically split with predetermined maximum depth information (or maximum level information). Furthermore, each spit TU may have depth information. The depth information may include information about the size of the TU because it indicates the split number and/or degree of the TU.

Information (e.g., a split TU flag "split_transform_flag") indicating whether a corresponding TU has been split with respect to one TU may be transferred to the decoder. The split information is included in all of TUs other than a TU of a minimum size. For example, if the value of the flag indicating whether a TU has been split is "1", the corresponding TU is split into four TUs. If the value of the flag indicating whether a TU has been split is "0", the corresponding TU is no longer split.

In an existing image compression coding/decoding technique, an encoder generates a prediction block (or a current processing block) of a current block through inter prediction or intra prediction and subtracts the prediction block from an original image (or input image) (or residual block). The encoder performs a transform for the generated residual signal, quantizes the transformed residual signal, and performs entropy encoding for a quantized coefficient. The decoder receives a signal output from the encoder and performs entropy decoding for the signal. The decoder generates a residual signal by performing dequantization and an inverse transform for the entropy-decoded signal. In addition, the decoder generates the prediction block of the current block and reconstructs the current block by summing the residual signal.

That is, in the existing image compression encoding/decoding technique, the encoder performs a primary transform (or a core transform) for the signal of a pixel region to generate a signal of the transform domain and performs quantization for the signal of the transform domain. However, if the signal of the transform domain is transformed (i.e., a secondary transform is performed) on the signal of the transform domain, the compression performance may be further enhanced as compared with the existing technique and the amount of residual signal data signaled to the decoder may be reduced.

The present invention proposes a method for efficiently a size of a transform kernel used for such a secondary transform.

Furthermore, the present invention proposes a method for performing the secondary transform by using the transform kernel adaptively selected according to the size of the block.

Furthermore, the present invention provides a method for adaptively selecting the kernel adapted to the secondary transform by transmitting the size of the transform kernel.

Furthermore, the present invention provides a method for determining whether to apply the secondary transform or an application range using the residual signal.

Furthermore, the present invention provides a method for deriving the size of the transform kernel applied to the secondary transform using the residual signal.

### Embodiment 1

In an embodiment of the present invention, the encoder/decoder may adaptively select the size of the transform kernel to be used for the secondary transform according to the size of the processing block and perform the secondary transform using the selected transform kernel.

Here, the processing block may refer to a unit (or block) in which a processing process of encoding/decoding such as prediction, transform, and/or quantization is performed and may be referred to as the block, the processing unit, and the like for convenience of description. Further, when the processing block is used as a unit in which the transform process is performed, the processing block may be referred to as the coding block, the coding unit, the transform block, the transform unit, etc.

According to the embodiment, the encoder may perform the primary transform and then perform the secondary transform for the primarily transformed residual signal before performing the quantization. In this case, the decoder may perform the dequantization for the residual signal received from the encoder and perform the secondary transform prior to performing the primary inverse transform for the dequantized residual signal.

In an image compression technique in which transform is performed in various block sizes like a Quadtree plus Binarytree (QTBT) structure, the encoder/decoder may apply the secondary transform by using a secondary transform kernel (or secondary transform) having a size suitable for the size of the block.

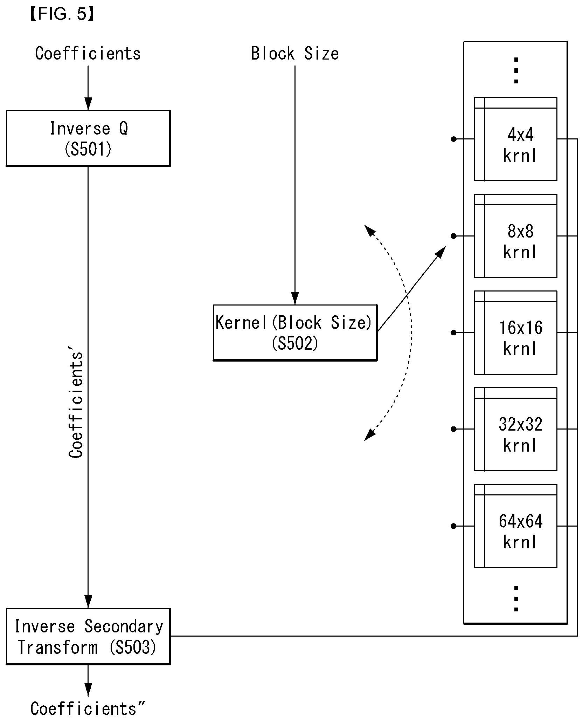

FIG. 5 is a diagram for describing a method for determining a size of a transform kernel used for secondary transform based on the size of a block as an embodiment to which the present invention is applied.

The method for determining the size of the transform kernel based on the size of the block described in the present invention may be applied to both the encoder and the decoder and is described based on the decoder for convenience of description.

Referring to FIG. 5, a case where a non-separable transform is applied for the secondary transform is assumed.

The decoder extracts the quantized transform coefficient from the bitstream received from the encoder and performs the dequantization for the extracted quantized transform coefficient (S501). In this case, the decoder may perform entropy decoding for the bitstream received from the encoder in order to extract the quantized transform coefficient.

The decoder determines the size of the secondary transform kernel applied to the current block by using the size (i.e., a width and a height of the current block) of the current block (S502). For example, the decoder may determine the secondary transform kernel determined according to the size of the current block (or mapped to the size of the current block) among predetermined secondary transform kernels having sizes of 4 × 4, 8 × 8, 16 × 16, 32 × 32, and 64 × 64.

For example, when the width or the height of the current block is smaller than 8, the decoder may perform the secondary transform by using the secondary transform kernel having the size of 4 x 4 for the current block. On the contrary, when the width or the height of the current block is equal to or larger than 8, the decoder may perform the secondary transform by using the secondary transform kernel having the size of 8 x 8.

The decoder performs the secondary inverse transform for the dequantized transform block by using the secondary transform kernel determined in step S502 (S503).

The dequantized transform block represents a 2D array of the dequantized transform coefficient extracted in step S501 above.

Further, when the size of the secondary inverse transform kernel applied to the current block is smaller than the size of the current block, the decoder may perform the secondary inverse transform only for an top-left region (i.e., a lower frequency domain) of the current block, partition the current block into subblocks of a unit of the secondary inverse transform kernel size, and apply the secondary inverse transform in nits of the subblock. In other words, the decoder may apply the secondary inverse transform only to the top-left region of the secondary inverse kernel size in the current block or apply the secondary inverse transform to the entire current block in units of the secondary inverse transform kernel size.

The decoder may generate the residual block of the current block by performing primary inverse transform for the current block which is subjected to the secondary inverse transform.

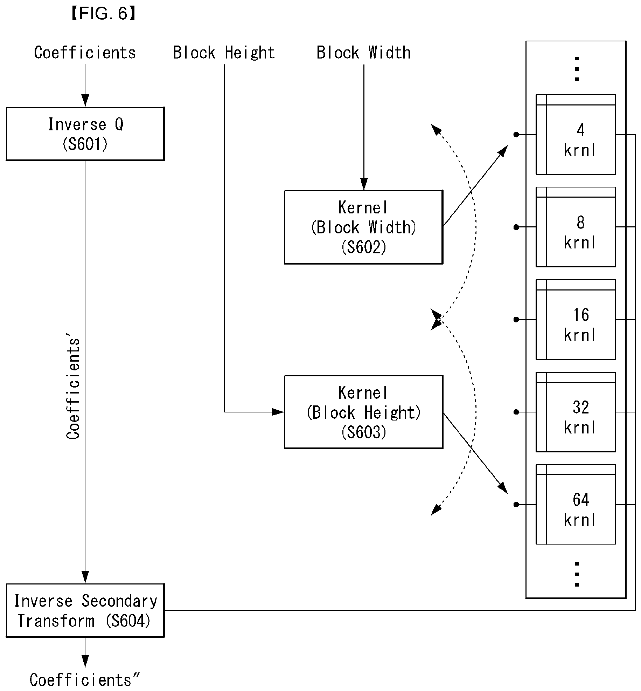

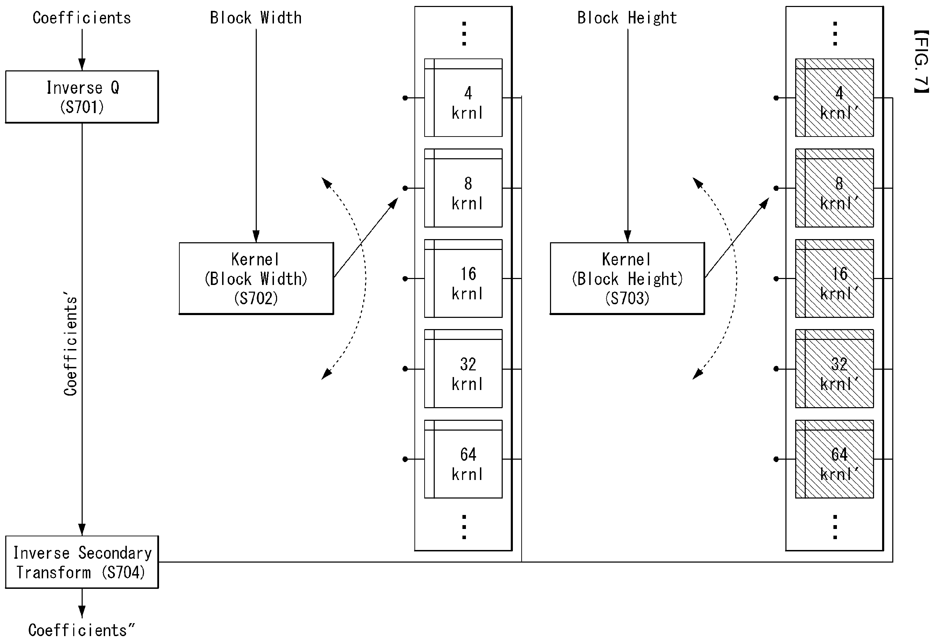

FIGS. 6 and 7 are diagrams for describing a method for determining a size of a transform kernel used for secondary transform based on a width and a height of a block as an embodiment to which the present invention is applied.

Referring to FIGS. 6 and 7, the case where non-separable transform is applied for the secondary transform is assumed.

The decoder extracts the quantized transform coefficient from the bitstream received from the encoder and performs the dequantization for the extracted quantized transform coefficient (S601 and S701). In this case, the decoder may perform entropy decoding for the bitstream received from the encoder in order to extract the quantized transform coefficient.

The decoder determines the size of the secondary transformation kernel applied to a horizontal direction of the current block using the width of the current block (S602 and S702). In addition, the decoder determines the size of the secondary transformation kernel applied to a vertical direction of the current block using the height of the current block (S603 and S703). For example, the decoder may determine each secondary transform kernel determined according to the width or the height of the current block (or mapped to the width or the height of the current block) among predetermined secondary transform kernels having sizes of 4, 8, 16, 32, and 64.

Here, FIG. 6 illustrates a case where the transform kernel applied to the horizontal direction and the transform kernel applied to the vertical direction are not distinguished and FIG. 7 illustrates a case where the transform kernel applied to the horizontal direction and the transform kernel applied to the vertical direction are distinguished.

The decoder performs the secondary inverse transform for the dequantized transform block by using the secondary transform kernel determined in steps S602, S603, S702, and S703 (S604 and S704).

Further, when the size of the secondary inverse transform kernel applied to the current block is smaller than the width or the height of the current block, the decoder may apply the secondary inverse transform only for the top-left region (i.e., the lower frequency domain) of the current block and partition the width or the height of the current block into size units of the secondary inverse transform kernel and perform the secondary inverse transform for the partitioned blocks.

The decoder may generate the residual block of the current block by performing the primary inverse transform for the transform block which is subjected to the primary inverse transform.

### Embodiment 2

In an embodiment of the present invention, the encoder may adaptively select the size of the transform kernel applied to the processing block and transmit size information of the transform kernel to the decoder.

In the example of Embodiment 1 described above, when the size of the current block is large, a transform kernel of a relatively larger size may be selected. However, even though the size of the current block is relatively larger, applying a smaller transform kernel may be advantageous in terms of the compression performance. Accordingly, transform kernels having various sizes may be applied by signaling kernel information having a size optimized to the current block is signaled to the decoder regardless of the size of the current block, thereby enhancing the compression performance.

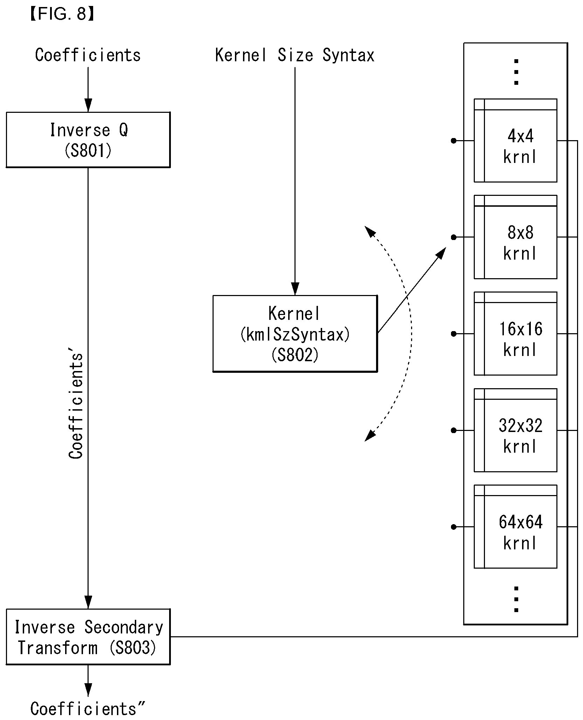

FIG. 8 is a diagram for describing a method for performing the secondary transform using a syntax that indicates the size of the transform kernel used for the secondary transform as an embodiment to which the present invention is applied.

The method for determining the size of the transform kernel described in the present invention may be applied to both the encoder and the decoder and is described based on the decoder for convenience of description.

Referring to FIG. 8, the case where non-separable transform is applied for secondary transform is assumed.

Step S801 may be performed similarly to step S501 of FIG. 5.

The decoder determines the size of the transform kernel applied to the current block by using the syntax indicating the size of the transform kernel used for the secondary transform (S802). In this case, a step of parsing a syntax having a transform kernel size from the bitstream may be added prior to step S802.

Step S803 may be performed similarly to step S503 of FIG. 5.

Further, even when a separable transform is applied to the secondary transform like the case illustrated in FIGS. 6 and 7 above, the method proposed in the embodiment may be applied in a method which is the same as the method described in FIG. 8.

### Embodiment 2-1

In the embodiment of the present invention, a method for transmitting the size of the transform kernel applied to the secondary transform in a compression method of a block structure in which the transform block and the coding block are the same as each other is proposed.

For example, in the case of a QTBT structure in which prediction, transformation, and quantization are performed in the same block unit (coding block and coding unit), additional partitioning into the transform block (or transform unit) in a transform procedure may not be performed. In this case, the encoder may select the size of the secondary transform kernel applied to the secondary transform and signal to the decoder the selected size of the secondary transform kernel in units of the coding block or a higher level (e.g., sequence, picture, slice, or CTU).

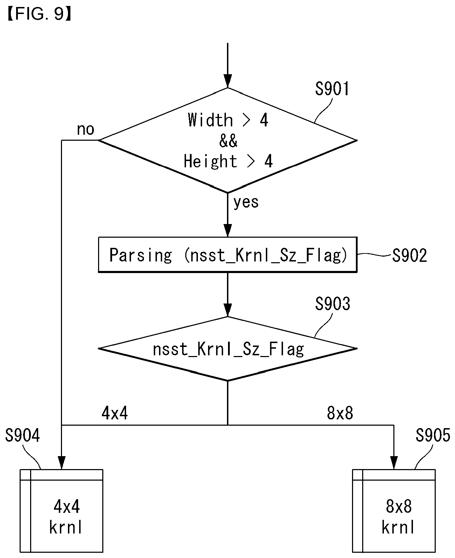

FIG. 9 is a flowchart showing a method for determining a size of a transform kernel used for secondary transform as an embodiment to which the present invention is applied.

Referring to FIG. 9, it is assumed that the method of determining the size of the transform kernel described in the embodiment is applied to the block structure in which the transform block and the coding block are determined to be the same as each other.

The decoder checks whether both the width and the height of the current block are larger than 4 (S901).

When the width and the height of the current block are both larger than 4 as a result of the determination in step S901, the decoder parses the syntax indicating the size of the secondary transform kernel (S902) and checks the size of the secondary transform kernel applied to the current block (S903). For example, when a non separable secondary transform (NSST) is applied, the syntax may be a syntax indicating the size of the NSST kernel.

When the syntax indicates a 4x4 kernel as a result of checking in step S903 or if the width or height of the current block is equal to or smaller than 4 as the result of the determination in step S901, the decoder applies the secondary transform to the current block by using the transform kernel having the 4 x 4 size (S904).

As the result of checking in step S903, when the syntax indicates the 8 x 8 kernel, the decoder applies the secondary transform to the current block by using the transform kernel having the 8 x 8 size (S905).

That is, even when the width and the height of the current block are both larger than 4, if the syntax transmitted from the encoder indicates the size of 4 × 4, the decoder may perform the secondary transform for the block region having the 4 x 4 size, the block region having the 8 x 8 size, or an entire region of the current block by using the secondary transform kernel having the 4 × 4 size.

In FIG. 9, the method is described by assuming that 4 × 4 size and 8 × 8 size transform kernels are applied for the secondary transform, but the present invention is not limited thereto. That is, a method proposed in the embodiment by using the transform kernels having various sizes as well as the 4 x 4 size and 8 x 8 size transform kernels may be applied. Further, the current block is larger than a block having a minimum size to which the secondary transform is applied, the decoder may determine the size of the secondary transform kernel applied to the current block based on syntax information transmitted from the encoder.

In an embodiment, the syntax indicating the secondary transform kernel may be transmitted from the encoder to the decoder in units of the sequence, the picture, the slice, the coding tree unit (CTU), or the coding block.

### Embodiment 2-2

In the embodiment of the present invention, a method for transmitting the size of the transform kernel applied to the secondary transform in a compression method of a block structure in which the transform block and the coding block are not the same as each other is proposed.

The method proposed in the embodiment may be applied to a block structure in which the transform block and the coding block may be determined to be different from each other unlike the method in Embodiment 2-1 described above. For example, the transform block (or transform unit) representing the unit in which the transform and the quantization are performed may be a block that is partitioned from the coding block.

In an embodiment, the encoder may transmit to the decoder a syntax indicating the size of the transform kernel in units of the coding block. In this case, the decoder may select the size of the kernel based on the syntax transmitted from the encoder in units of the transform block in the coding block and apply the secondary transform. In this case, the decoder may perform the secondary transform using the minimum size secondary transform kernel regardless of the syntax received from the encoder when the transform block has the same size as the minimum size block to which the secondary transformation is applied.

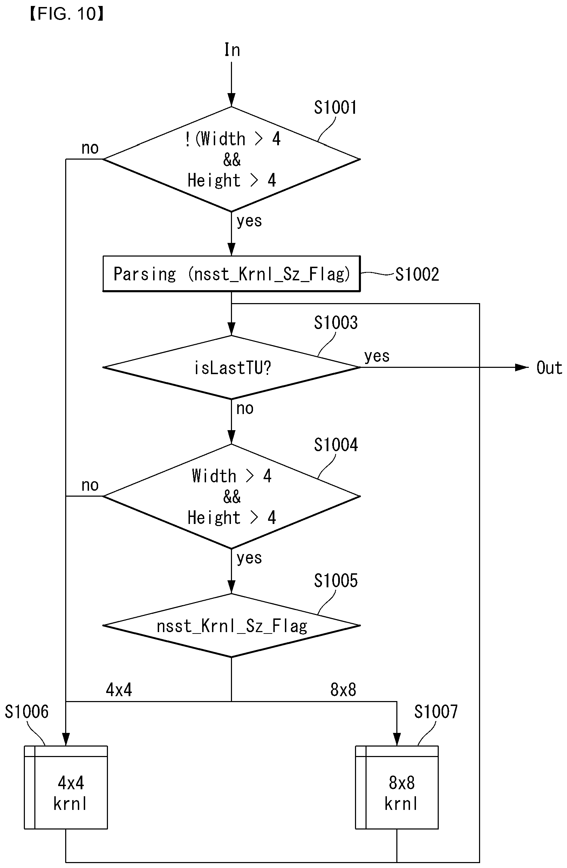

FIG. 10 is a flowchart showing a method for determining a size of a transform kernel used for secondary transform as an embodiment to which the present invention is applied.

Referring to FIG. 10, it is assumed that the method of determining the size of the transform kernel described in the embodiment is applied to the block structure in which the transform block and the coding block are individually (or hierarchically) determined. Further, it is assumed that the syntax indicating the secondary transform kernel is transmitted in units of the coding block.

The decoder checks whether both the width and the height of the current coding block are larger than 4 (S1001).

When both the width and the height of the current coding block are larger than 4 as the result of the determination in step S1001, the decoder parses the syntax indicating the size of the secondary transform kernel (S1002).

Thereafter, the decoder may determine the size of the secondary transform kernel while looping in units of the transform block (or transform unit) in the current coding block.

Specifically, the decoder checks whether the current transform block in the current coding block is a last transform block (S1003).

As the result of checking in step S1003, the decoder checks whether the width and the height of the current transform block are both larger than 4 until the current transform block becomes the last transform block (S1004). When the width and the height of the current block are both larger than 4 as a result of the determination in step S1004, the decoder checks of the secondary transform kernel applied to the current transform block by using the syntax parsed in step S1002 (S1005). For example, when the non separable secondary transform (NSST) is applied, the syntax may be the syntax indicating the size of the NSST kernel.

When the syntax indicates the 4x4 kernel as the result of checking in step S1005, when the width or height of the current coding block is equal to or smaller than 4 as the result of the determination in step S1001, or when the width or height of the current transform block is equal to or smaller than 4 as the result of the determination in step S1004, the decoder applies the secondary transform to the current block by using the transform kernel having the 4 x 4 size (S1006).

As the result of checking in step S1005, when the syntax indicates the 8 x 8 kernel, the decoder applies the secondary transform to the current transform block by using the transform kernel having the 8 x 8 size (S1007).

That is, the decoder may parse the syntax indicating the transform kernel in units of the coding block. The decoder may then determine the size of the secondary transform kernel using the syntax parsed in units of the transform block within the coding block. That is, even when the width and the height of the current block are both larger than 4, if the syntax transmitted from the encoder indicates the 4 x 4 size, the decoder may perform the secondary transform for the block region having the 4 x 4 size, the block region having the 8 x 8 size, or an entire region of the current transform block by using the secondary transform kernel having the 4 × 4 size.

In FIG. 10, the method is described by assuming that 4 × 4 size and 8 × 8 size transform kernels are applied for the secondary transform, but the present invention is not limited thereto. That is, a method proposed in the embodiment by using the transform kernels having various sizes as well as the 4 x 4 size and 8 x 8 size transform kernels may be applied. Further, the current transform block is larger than a block having a minimum size to which the secondary transform is applied, the decoder may determine the size of the secondary transform kernel applied to the current transform block based on the syntax information transmitted from the encoder.

In an embodiment, the syntax indicating the secondary transform kernel may be transmitted from the encoder to the decoder in units of the sequence, the picture, the slice, the CTU, or the coding block in addition to the unit of the coding block.

Further, in an embodiment of the present invention, when a block structure in which the luma component and the chroma component are different is provided, the encoder may signal the size information of the transform kernel to the decoder like the examples of Tables 1 to 4 below.

In the examples of Tables 1 to 4 below, it is assumed that block structures of the luma component (or a luma channel) and the chroma component (or a chroma channel) are determined to be different from each other in the case of slice I and the block structures of the luma component and the chroma component are determined to be the same as each other in the case of slice B. In the case of slice B, since the block structures of the luma component and the chroma component are determined to be the same as each other, the encoder may transmit to the decoder a flag indicating the size of the transform kernel only for the luma component. Further, it is assumed that the size of the current block is larger than that of the 8 x 8 block. When the size of the current block is not larger than that of the 4 x 4 block or when the current block is the minimum size block, the transform kernel having the 4 x 4 size may be applied to the current block.

**[Table 1]**

| | Slice I | | Slice B | |
|---|---|---|---|---|
| | Luma | Chroma | Luminance | Chroma |
| Flag | ○ | X | ○ | |
| 4 × 4 kernel | ○ | X | ○ | X |
| 8 × 8 kernel | ○ | ○ | ○ | ○ |

Referring to Table 1, in slice I, the encoder may not signal to the decoder a flag indicating the size of the transform kernel for the chroma component. In this case, the encoder/decoder may apply the 8x8 size transform kernel to a chroma component block having the 8 x 8 size or more regardless of the flag information of the luma component. Even for the chroma component of slice B, the encoder/decoder may apply the 8x8 size transform kernel to the chroma component block having the 8 x 8 size or more regardless of the flag information of the luma component.

**[Table 2]**

| | Slice I | | Slice B | |
|---|---|---|---|---|
| | Luma | Chroma | Luma | Chroma |
| Flag | ○ | X | ○ | |
| 4 × 4 kernel | ○ | X | ○ | ○ |
| 8 × 8 kernel | ○ | ○ | ○ | ○ |

Referring to Table 2, in slice I, the encoder may not signal to the decoder the flag indicating the size of the transform kernel for the chroma component. In this case, the encoder/decoder may apply the 8x8 size transform kernel to a chroma component block having the 8 x 8 size or more regardless of the flag information of the luma component. Meanwhile, in the case of slice B, since the blocks structures may be determined to be the same as each other, the encoder/decoder may apply the 4 x 4 or 8x8 size transform kernel to the chroma component block having the 8 x 8 size or more according to the flag information of the luma component.

**[Table 3]**

| | Slice I | | Slice B | |
|---|---|---|---|---|
| | Luma | Chroma | Luma | Chroma |
| Flag | ○ | ○ | ○ | |
| 4 × 4 kernel | ○ | ○ | ○ | ○ |
| 8 × 8 kernel | ○ | ○ | ○ | ○ |

Referring to Table 3, in slice I, the encoder may signal to the decoder the flag indicating the size of the transform kernel for the chroma component. In this case, the encoder/decoder may determine the size of the transform kernel and apply the secondary transform by using the signaled information for each component. Meanwhile, in the case of slice B, since the blocks structures may be determined to be the same as each other, the encoder/decoder may apply the 4 x 4 or 8x8 size transform kernel to the chroma component block having the 8 x 8 size or more according to the flag information of the luma component.

**[Table 4]**

| | Slice I | | Slice B | |
|---|---|---|---|---|
| | Luma | Chroma | Luma | Chroma |
| Flag | ○ | X | ○ | |
| 4 × 4 kernel | ○ | ○ | ○ | ○ |
| 8 × 8 kernel | ○ | ○ | ○ | ○ |

Referring to Table 4, in slice I, the encoder may not signal to the decoder the flag indicating the size of the transform kernel for the chroma component. In this case, the encoder/decoder may apply the 4 x 4 size or 8x8 size transform kernel to the chroma component block having the 8 x 8 size or more according to the flag information of the luma component. In addition, in the case of slice B, since the blocks structures may be determined to be the same as each other, the encoder/decoder may apply the 4 x 4 or 8x8 size transform kernel to the chroma component block having the 8 x 8 size or more according to the flag information of the luma component.

### Embodiment 3

In an embodiment of the present invention, the encoder/decoder may determine whether to apply the secondary transform or adaptively select the size of the transform kernel by using characteristics of the residual signal of the block signaling in applying the secondary transform. In Embodiment 2 described above, the decoder may receive from the encoder the syntax indicating the size of the transform kernel, while in the embodiment, the decoder may derive the size of the transform kernel by using the characteristics in the block without receiving an additional syntax.

### Embodiment 3-1

In an embodiment of the present invention, the encoder/decoder may determine whether to apply the secondary transform considering the characteristics of the residual signal in the block. For example, the encoder/decoder may determine whether to apply the secondary transform using a degree of distribution of the residual signal, the number of residual signals, or the size of the residual signal.

It is possible to save bits used for the flag for indicating the secondary transform and to enhance the compression performance by determining whether to apply the secondary transform based on the residual signal.

Hereinafter, the present invention will be described on the assumption that the non separable secondary transform (NSST) is used as the secondary transform, but the present invention is not limited thereto. Other known transforms may be applied as the secondary transform.

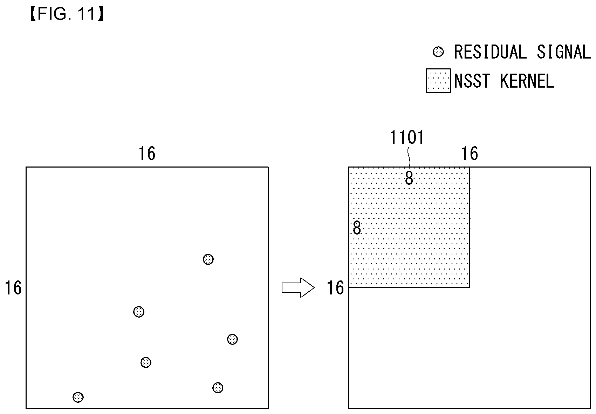

FIG. 11 is a diagram illustrating a method for determining whether to apply secondary transform by using a residual signal according to an embodiment of the present invention.

Referring to FIG. 11, it is assumed that the size of the current block is 16 × 16 and the NSST is applied to the 8 × 8 block 1101 at the top-left end.

As illustrated in FIG. 11, if the residual signal is not distributed in the top-left 8 × 8 block 1101, there is no difference between the case of applying NSST and the case of not applying NSST and an unnecessary bit may be used to signal whether to apply the NSST or the size of the kernel.

Therefore, in an embodiment of the present invention, a method for determining whether to apply the secondary transform based on the distribution of the residual signal is proposed in order to solve such a problem.

The encoder/decoder may determine whether to apply the secondary transform according to whether the residual signal is distributed in the top-left 8x8 region 1101 of the current block.

In an embodiment, the encoder/decoder may not perform the secondary transform when there is no residual signal in the top-left 8x8 region 1101 to which the secondary transform is applied. In other words, the secondary transform may be applied to the corresponding region when there are one or more residual signals in the top-left 8x8 region 1101.

Alternatively, the encoder/decoder may apply the secondary transform when the number of residual signals which exist in the top-left 8x8 region 1101 is larger than a specific threshold. When the number of residual signals is equal to or smaller than the specific threshold, the encoder/decoder may not apply the secondary transform.

### Embodiment 3-2

In an embodiment of the present invention, the encoder/decoder may determine the application range of the secondary transform considering the characteristics of the residual signal in the block. When the secondary transform is applied to the entire block, the larger the block size, the higher the complexity and the compression performance may be degraded.

Accordingly, in order to solve such a problem, the present invention proposes a method for determining whether to apply the secondary transform in units of sub-regions in the block. According to the embodiment of the present invention, the complexity may be reduced by applying the secondary transform to a block in which one or more residual signals or a specific number or more of residual signals exist.

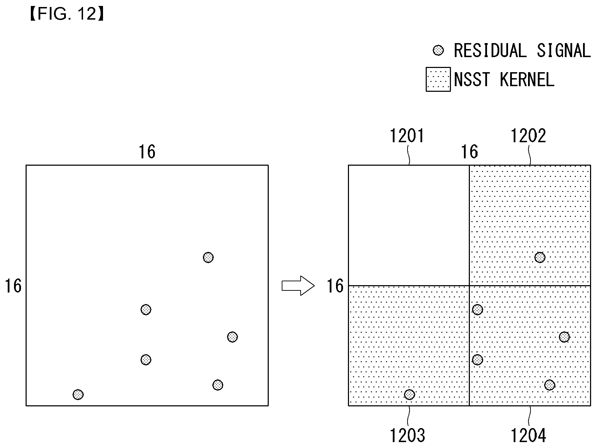

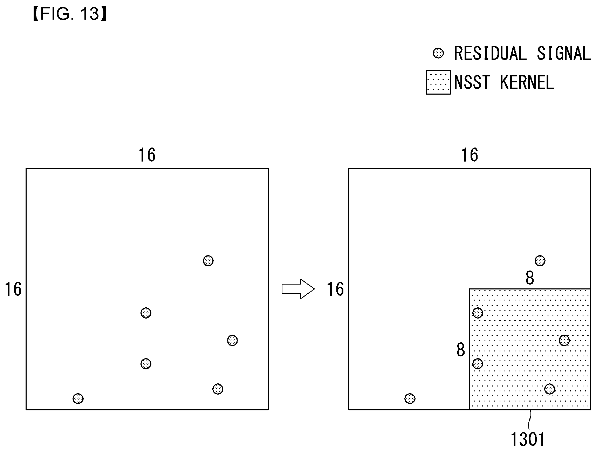

FIGS. 12 and 13 are diagrams illustrating a method for determining whether to apply secondary transform by using a residual signal according to an embodiment of the present invention.

Referring to FIG. 12, the encoder/decoder may partition the current block (or the current residual block) into subblocks (or sub-regions) and determine whether to apply the secondary transform based on the residual signals in units of the partitioned subblocks.

The encoder may or may transmit the flag indicating whether to apply the secondary transform to the decoder or vice versa. When the flag indicating whether to apply the secondary transform is signaled by the encoder, the decoder may determine whether to apply the secondary transform by the received flag. In addition, when the received flag indicates application of the secondary transform, the decoder may partition the current block into a plurality of subblocks and determine whether to apply the secondary transform in units of the subblock based on the residual signal in each subblock.

When the flag indicating whether to apply the secondary transform is not signaled by the encoder, the decoder may partition the current block into the plurality of subblocks and determine whether to apply the secondary transform in units of the subblock based on the residual signal in each subblock.

When there is no residual signal in the partitioned subblock, the encoder/decoder may determine that the secondary transform is not applied and when there are one or more residual signals in the partitioned subblock, the encoder/decoder may determine to apply the secondary transform.

For example, when the size of the current block is 16 x 16, the encoder/decoder may partition the current block into 8 x 8 size subblocks. When there is no residual signal in an top-left subblock 1201 as illustrated in FIG. 12, the encoder/decoder may not apply the secondary transform to the top-left subblock 1201.

On the contrary, as illustrated in FIG. 12, when there is the residual signal in an upper right subblock 1202, a lower left subblock 1203, and a lower right subblock 1204, the encoder/decoder may apply the secondary transform to the corresponding subblocks 1202, 1203, and 1204.

Referring to FIG. 13, when there are residual signals of a specific number (or threshold) or more in the partitioned subblock, the encoder/decoder may determine that the secondary transform is not applied and when there are residual signals of a specific number or more in the partitioned subblock, the encoder/decoder may determine to apply the secondary transform.

For example, when the size of the current block is 16 x 16, the encoder/decoder may partition the current block into 8 x 8 size subblocks. When a specific number or more of residual signals do not exist in the top-left subblock, the upper right subblock and the lower left subblock as illustrated in FIG. 13, the encoder/decoder may not apply the secondary transform to the top-left subblock, the upper right subblock and the lower left subblock. Here, a specific number representing a threshold for determining whether to apply the secondary transform may have a predetermined value. In the embodiment, it is assumed that the specific number is 2.

On the contrary, when a specific number or more of residual signals exist in a lower right subblock 1301 illustrated in FIG. 13, the encoder/decoder may apply the secondary transform to the lower right subblock 1301.

### Embodiment 3-3

In an embodiment of the present invention, the encoder/decoder may determine the size of the secondary transform kernel considering the characteristics of the residual signal in the block. When the secondary transform is performed using a secondary transformation kernel of a predetermined size irrespective of a distribution range of the residual signal, the secondary transform may be applied to an unnecessary region when the residual signal is distributed only in a relatively small region, and as a result, compression efficiency may be reduced.

The encoder/decoder may adaptively determine the size of the secondary transform kernel based on the distribution degree of the residual signal.

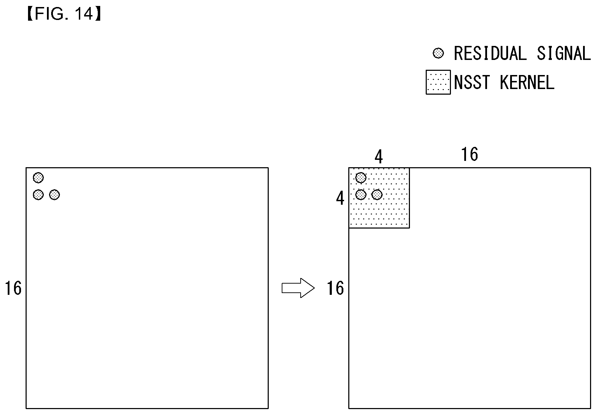

FIG. 14 is a diagram illustrating a method for determining a size of a secondary transform kernel by using a residual signal according to an embodiment of the present invention.

Referring to FIG. 14, the encoder/decoder may check the distribution region of the residual signal in the current block. For example, the encoder/decoder may check whether the residual signal exists for each applicable size of the secondary transform kernel. The encoder/decoder may determine the minimum size of the transform kernel, which includes the existing region of the residual signal among applicable transform kernels, as the transform kernel applied to the secondary transform of the current block.

For example, when the 4x4 size and 8x8 size transform kernels exist as the applicable secondary transform kernel and the residual signal exists only in the 4x4 size region as illustrated in FIG. 14, the encoder/the decoder may determine the size of the transform kernel applied to the secondary transform of the current block as the 4 x 4 size.

In regard to the embodiments described above, the respective embodiments may be independently applied and various embodiments may be used in combination.

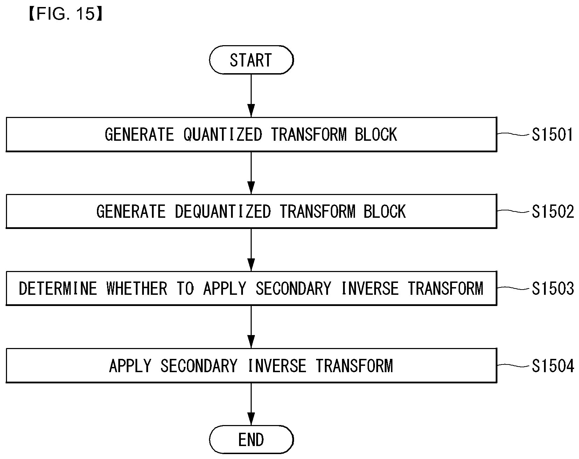

FIG. 15 is a diagram illustrating a decoding method of a video signal according to an embodiment of the present invention.

Hereinafter, the decoder will be primarily described for convenience of description in describing the embodiment, but the decoding method of the video signal according to the present invention may be performed in the encoder and the decoder in the same manner.

The decoder generates a quantized transform block by performing entropy decoding for the video signal (S1501). Specifically, the decoder may extract quantized transform coefficients by entropy-decoding the bitstream received from the encoder to extract the quantized transform coefficients. In addition, the decoder may generate the quantized transform blocks of a 2D array by arranging the quantized transform coefficients according to a predetermined scanning order.

The decoder generates a dequantized transform block by performing dequantization for the quantized transform block (S1502).

The decoder determines whether to apply secondary inverse transform based on information related to a non-zero coefficient in the dequantized transform block (S1503).

As described above in FIG. 11, step S1503 may include checking whether there are one or more non-zero coefficients in the upper-left specific region of the current block (i.e., the dequantized transform block). When one or more non-zero coefficients exist in the specific region, the secondary inverse transform may be applied to the current block.

Further, step S1503 may include checking the number of non-zero coefficients in the top-left specific region of the current block. When the number of non-zero coefficients in the specific region exceeds a specific threshold, the decoder may apply the secondary inverse transform to the current block.

Further, as described in FIGS. 12 and 13, the decoder may partition the current block into subblocks of a specific size and determine whether to apply the secondary inverse transform in units of the partitioned subblocks. In this case, the decoder may check whether there are one or more non-zero coefficients in a current subblock. As the result of the checking, when one or more non-zero coefficients exist in the current subblock, the decoder may apply the secondary inverse transform to the current subblock.

Alternatively, the decoder may check the number of non-zero coefficients in the current subblock. When the number of non-zero coefficients in the specific region exceeds a specific threshold, the decoder may apply the secondary inverse transform to the current subblock.

Further, as described in FIG. 14 above, the decoder may determine the size of the secondary inverse transform kernel applied to the current block based on information related to the non-zero coefficient in the current block. Specifically, the size of the secondary inverse transform kernel may be determined as the size of a smallest secondary inverse transform kernel among secondary inverse transform kernels including the non-zero coefficients which exist in a region having a specific size at a top-left specific size of the current block.

Further, as described in FIGS. 8 to 10, when the size of the current block is larger than that of a predetermined block having a minimum size, the decoder may extract a syntax indicating the size of the secondary inverse transform kernel from the video signal. In addition, the decoder may determine the size of the secondary inverse transform kernel applied to the current block based on the syntax. The syntax indicating the size of the secondary inverse transform kernel may be transmitted in units of a sequence, a picture, a slice, a coding block, or a transform block.

The decoder performs the secondary inverse transform for the dequantized transform block by using the secondary inverse transform kernel applied to the dequantized transform block. For example, the second inverse transform may be performed using any one of a Discrete Cosine Transform (DCT), a Discrete Sine Transform (DST), a Karhunen Loeve transform, a Graph based Transform, a Non-Separable Secondary Transform (NSST).

In addition, the decoder may generate the residual block by performing the primary inverse transform for the transform block which is subjected to the secondary inverse transform.

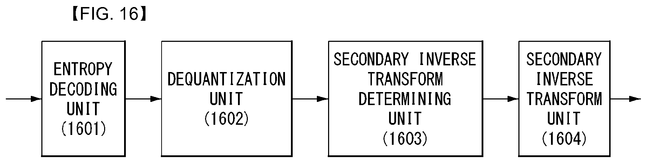

FIG. 16 is a diagram illustrating a decoding apparatus of a video signal according to an embodiment of the present invention.

In FIG. 16, an entropy decoding unit 1601, a dequantization unit 1602, a secondary inverse transform determining unit 1603, and a secondary inverse transform unit 1604 are shown as separate blocks, respectively, but may be implemented as components included in the encoder and/or the decoder.

Referring to FIG. 16, the decoding apparatus implements the functions, procedures, and/or methods proposed in FIGS. 5 to 15 above. Specifically, the decoding apparatus may be configured to include an entropy decoding unit 1601, a dequantization unit 1602, a secondary inverse transformation determining unit 1603, and a secondary inverse transform unit 1604. The entropy decoding unit 1601 and the dequantization unit 1602 may be included in the entropy decoding unit 210 (in FIG. 2) and the dequantization unit 220 (in FIG. 2) described in FIG. 2 above, respectively. In addition, the secondary inverse transform determining unit 1603 and/or the secondary inverse transform unit 1604 may be included in the inverse transform unit 230 (in FIG. 2) described in FIG. 2.

The entropy decoding unit 1601 generates a quantized transform block by performing entropy decoding for the video signal. Specifically, the entropy decoding unit 1601 may extract quantized transform coefficients by entropy-decoding the bitstream received from the encoder. In addition, the entropy decoding unit 1601 may generate the quantized transform blocks of the 2D array by arranging the quantized transform coefficients according to a predetermined scanning order.

The dequantization unit 1602 generates a dequantized transform block by performing dequantization for the quantized transform block.

The secondary inverse transform determining unit 1603 determines whether to apply the secondary inverse transform based on information related to a non-zero coefficient in the dequantized transform block.

As described above in FIG. 11, the secondary inverse transform determining unit 1603 may check whether there are one or more non-zero coefficients in the top-left specific region of the current block (i.e., the dequantized transform block). When one or more non-zero coefficients exist in the specific region, the secondary inverse transform determining unit 1603 may determine that the secondary inverse transform is applied to the current block.

Further, the secondary inverse transform determining unit 1603 may check the number of non-zero coefficients in the top-left specific region of the current block. When the number of non-zero coefficients in the specific region exceeds a specific threshold, the secondary inverse transform determining unit 1603 may determine that the secondary inverse transform is applied to the current block.

Further, as described above in FIGS. 12 and 13, the secondary inverse transform determining unit 1603 may partition the current block into subblocks of a specific size and determine whether to apply the secondary inverse transform in units of the partitioned subblocks. In this case, the secondary inverse transform determining unit 1603 may check whether there are one or more non-zero coefficients in a current subblock. As the checking result, when one or more non-zero coefficients exist in the current subblock, the secondary inverse transform determining unit 1603 may determine that the secondary inverse transform is applied to the current subblock.

Alternatively, the secondary inverse transform determining unit 1603 may check the number of non-zero coefficients in the current subblock. When the number of non-zero coefficients in the current subblock exceeds a specific threshold, the secondary inverse transform determining unit 1603 may determine that the secondary inverse transform is applied to the current subblock.

Further, as described above in FIG. 14, the secondary inverse transform determining unit 1603 may determine the size of the secondary inverse transform kernel applied to the current block based on information related to the non-zero coefficient in the current block. Specifically, the size of the secondary inverse transform kernel may be determined as the size of a smallest secondary inverse transform kernel among secondary inverse transform kernels including the non-zero coefficients which exist in a region having a specific size at a top-left specific size of the current block.

Further, as described in FIGS. 8 to 10, when the size of the current block is larger than that of a predetermined block having a minimum size, the decoder may extract a syntax indicating the size of the secondary inverse transform kernel from the video signal. In addition, the secondary inverse transform determining unit 1603 may determine the size of the secondary inverse transform kernel applied to the current block based on the syntax. The syntax indicating the size of the secondary inverse transform kernel may be transmitted in units of a sequence, a picture, a slice, a coding block, or a transform block.

The secondary inverse transform unit 1604 performs the secondary inverse transform for the dequantized transform block by using the secondary inverse transform kernel applied to the dequantized transform block (S1504). For example, the second inverse transform may be performed using any one of a Discrete Cosine Transform (DCT), a Discrete Sine Transform (DST), a Karhunen Loeve transform, a Graph based Transform, a Non-Separable Secondary Transform (NSST).

In addition, the decoder may generate the residual block by performing the primary inverse transform for the transform block which is subjected to the secondary inverse transform.

In the embodiments described above, the components and the features of the present invention are combined in a predetermined form. Each component or feature should be considered as an option unless otherwise expressly stated. Each component or feature may be implemented not to be associated with other components or features. Further, the embodiment of the present invention may be configured by associating some components and/or features. The order of the operations described in the embodiments of the present invention may be changed. Some components or features of any embodiment may be included in another embodiment or replaced with the component and the feature corresponding to another embodiment. It is apparent that the claims that are not expressly cited in the claims are combined to form an embodiment or be included in a new claim by an amendment after the application.

The embodiments of the present invention may be implemented by hardware, firmware, software, or combinations thereof. In the case of implementation by hardware, according to hardware implementation, the exemplary embodiment described herein may be implemented by using one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, and the like.

In the case of implementation by firmware or software, the embodiment of the present invention may be implemented in the form of a module, a procedure, a function, and the like to perform the functions or operations described above. A software code may be stored in the memory and executed by the processor. The memory may be positioned inside or outside the processor and may transmit and receive data to/from the processor by already various means.

It is apparent to those skilled in the art that the present invention may be embodied in other specific forms without departing from essential characteristics of the present invention. Accordingly, the aforementioned detailed description should not be construed as restrictive in all terms and should be exemplarily considered. The scope of the present invention should be determined by rational construing of the appended claims and all modifications within an equivalent scope of the present invention are included in the scope of the present invention.

### [Industrial Applicability]

Hereinabove, the preferred embodiments of the present invention are disclosed for an illustrative purpose and hereinafter, modifications, changes, substitutions, or additions of various other embodiments will be made within the technical spirit and the technical scope of the present invention disclosed in the appended claims by those skilled in the art.

## Claims

1. A method for decoding a video signal, the method comprising:
generating a quantized transform block by performing entropy decoding for the video signal;
generating a dequantized transform block by performing dequantization for the quantized transform block;
determining whether to apply secondary inverse transform based on information related to a non-zero coefficient in the dequantized transform block; and
performing the secondary inverse transform for the dequantized transform block by using a secondary inverse transform kernel applied to the dequantized transform block.

2. The method of claim 1, wherein the determining of whether to apply the second inverse transform comprises checking whether one or more non-zero coefficients exist in a top-left specific region of the dequantized transform block, and
wherein if one or more non-zero coefficients exist in the specific region, the secondary inverse transform is applied to the dequantized transform block.

3. The method of claim 1, wherein the determining of whether to apply the second inverse transform comprises checking the number of non-zero coefficients in the top-left specific region of the dequantized transform block, and
wherein if the number of non-zero coefficients in the specific region exceeds a specific threshold, the secondary inverse transform is applied to the dequantized transform block.

4. The method of claim 1, wherein the determining of whether to apply the second inverse transform comprises:
partitioning the dequantized transform block into subblocks having a specific size, and
determining whether to apply the second inverse transform in units of the subblock.

5. The method of claim 4, wherein the determining of whether to apply the second inverse transform in units of the subblock comprises checking whether one or more non-zero coefficients exist in a current subblock, and
wherein if one or more non-zero coefficients exist in the current subblock, the secondary inverse transform is applied to the current subblock.

6. The method of claim 4, wherein the determining of whether to apply the second inverse transform in units of the subblock comprises checking a number of non-zero coefficients in the current subblock, and
wherein if the number of non-zero coefficients in the current subblock exceeds a specific threshold, the secondary inverse transform is applied to the current subblock.

7. The method of claim 1, further comprising:
determining a size of the secondary inverse transform kernel applied to the dequantized transform block based on information related to the non-zero coefficient in the dequantized transform block.

8. The method for decoding a video signal of claim 7, wherein the size of the secondary inverse transform kernel is determined as a size of a smallest secondary inverse transform kernel among secondary inverse transform kernels including the non-zero coefficients which exist in a region having a specific size at a top-left specific size of the dequantized transform block.

9. The method of claim 1, further comprising:
if the size of the dequantized transform block is larger than a block having a predetermined minimum size, extracting a syntax indicating the size of the secondary inverse transform kernel from the video signal; and
determining the size of the secondary inverse transform kernel applied to the dequantized transform block based on the syntax.

10. The method for decoding a video signal of claim 9, wherein the syntax indicating the size of the secondary inverse transform kernel is transmitted in units of a sequence, a picture, a slice, a coding block, or a transform block.

11. An apparatus for decoding a video signal, the apparatus comprising:
an entropy decoding unit generating a quantized transform block by performing entropy decoding for the video signal;
a dequantization unit generating a dequantized transform block by performing dequantization for the quantized transform block;
a secondary inverse transform determination unit determining whether to apply secondary inverse transform based on information related to a non-zero coefficient in the dequantized transform block; and
a secondary inverse transform unit performing the secondary inverse transform for the dequantized transform block by using a secondary inverse transform kernel applied to the dequantized transform block.
